(19)

Europäisches
Patentamt

European
Patent Office

Office européen
des brevets

(11) **EP 3 264 630 B1**

(12) **EUROPEAN PATENT SPECIFICATION**

(45) Date of publication and mention
of the grant of the patent:
**23.02.2022 Bulletin 2022/08**

(21) Application number: **17178068.7**

(22) Date of filing: **27.06.2017**

(51) International Patent Classification (IPC):
*H04B 7/06* (2006.01)  *H04W 36/30* (2009.01)
*H04W 24/10* (2009.01)  *H04W 48/16* (2009.01)

(52) Cooperative Patent Classification (CPC):
**H04W 24/10; H04B 7/0695; H04W 36/30;
H04W 48/16**

(54) **METHOD AND APPARATUS FOR HANDLING MEASUREMENT IN A WIRELESS
COMMUNICATION SYSTEM**

VERFAHREN UND VORRICHTUNG ZUR HANDHABUNG VON MESSUNGEN IN EINEM
DRAHTLOSKOMMUNIKATIONSSYSTEM

PROCÉDÉ ET APPAREIL DE GESTION DE MESURE DANS UN SYSTÈME DE COMMUNICATION
SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2016  US 201662357681 P**

(43) Date of publication of application:
**03.01.2018 Bulletin 2018/01**

(73) Proprietor: **ASUSTek Computer Inc.
Taipei City 112 (TW)**

(72) Inventors:
 • **GUO, Yu-Hsuan
  Taipei City 112 (TW)**
 • **OU, Meng-Hui
  Taipei City 112 (TW)**
 • **YIN, Wei-Ming
  Taipei City 112 (TW)**
 • **KUO, Richard Lee-Chee
  Taipei City 112 (TW)**

(74) Representative: **Hoefer & Partner Patentanwälte
mbB
Pilgersheimer Straße 20
81543 München (DE)**

(56) References cited:
 **WO-A1-2016/018121  US-A1- 2016 006 122**

 • **SAMSUNG: "Discussion on Beam Measurement
  for 5G New Radio Interface in mmWave
  Frequency Bands", 3GPP DRAFT; R2-163652,
  3RD GENERATION PARTNERSHIP PROJECT
  (3GPP), MOBILE COMPETENCE CENTRE ; 650,
  ROUTE DES LUCIOLES ; F-06921
  SOPHIA-ANTIPOLIS CEDEX ; FRANCE , vol. RAN
  WG2, no. Nanjing, China; 20160523 - 20160527 22
  May 2016 (2016-05-22), XP051105081, Retrieved
  from the Internet:
  URL:http://www.3gpp.org/ftp/Meetings_3GPP_
  SYNC/RAN2/Docs/ [retrieved on 2016-05-22]**

**Description**

This disclosure generally relates to wireless communication networks, and more particularly, to methods and apparatuses for handling measurement in a wireless communication system according to the pre-characterizing parts of independent claims 1, 4, 8, 11, and 12. Such methods and apparatuses are respectively known from 3GPP document R2-163652, WO 2016/018121 A1, and US 2016/0006122 A1.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

**SUMMARY**

Methods and apparatuses are disclosed for handling measurement in a wireless communication system and are defined in independent claims 1, 4, 8, 11, and 12, respectively. According to the invention, the method includes a UE (User Equipment) measuring a signal of a cell to derive information related to beamforming. The method further includes the UE providing the information to a network node, wherein the information comprises at least an average or a summation of measurement results for N-best qualified beams of a qualified Transmission/Reception Point (TRP) of the cell. The method also includes receiving a configuration of the N and a configuration of a second threshold from the network node, wherein the number of qualified beams to derive the average or the summation is threshold if N is less than Q, and wherein a beam is qualified if the measurement result of the beam is better than the second threshold , a total number of qualified beams of the cell is Q, and a TRP is qualified if the measurement result of the TRP is better than an associated threshold.

**BRIEF DESCRIPTION OF THE DRAWINGS**

FIG. 1     shows a diagram of a wireless communication system according to one exemplary embodiment not covered by the claimed invention.

FIG. 2     is a block diagram of a transmitter system (also known as access network) and a receiver system (also known as user equipment or UE) according to one exemplary embodiment not covered by the claimed invention.

FIG. 3     is a functional block diagram of a communication device according to one exemplary embodiment.

FIG. 4     is a functional block diagram of the program code of FIG. 3 according to one exemplary embodiment not covered by the claimed invention.

FIG. 5     is a diagram according to one exemplary embodiment not covered by the claimed invention.

FIG. 6     is a diagram according to one exemplary embodiment not covered by the claimed invention.

FIG. 7     is a diagram according to one exemplary embodiment not covered by the claimed invention.

FIG. 8     is a diagram according to one exemplary embodiment not covered by the claimed invention.

FIG. 9     is a diagram according to one exemplary embodiment not covered by the claimed invention.

FIG. 10    is a diagram according to one exemplary embodiment not covered by the claimed invention.

FIG. 11    is a diagram according to one exemplary embodiment not covered by the claimed invention.

FIG. 12    is a reproduction of Figure 3 of 3GPP R2-162251, which is not covered by the claimed invention.

FIG. 13    is a reproduction of Figure 4 of 3GPP R2-162251, which is not covered by the claimed invention.

FIG. 14    is a reproduction of Figure 1 of 3GPP R1-165364, which is not covered by the claimed invention.

FIG. 15    is a reproduction of Figure 2 of 3GPP R1-165364, which is not covered by the claimed invention.

FIG. 16    is a flow chart according to one exemplary embodiment not covered by the claimed invention.

FIG. 17    is a flow chart according to one exemplary embodiment not covered by the claimed invention.

FIG. 18    is a flow chart according to one exemplary embodiment not covered by the claimed invention.

FIG. 19    is a flow chart according to one exemplary embodiment not covered by the claimed invention.

FIG. 20    is a flow chart according to one exemplary embodiment not covered by the claimed invention.

FIG. 21    is a flow chart according to one exemplary embodiment of the claimed invention.

FIG. 22    is a flow chart according to one exemplary embodiment not covered by the claimed invention.

FIG. 23    is a flow chart according to one exemplary embodiment of the claimed invention.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: R2-162366, "Beam Forming Impacts", Nokia, Alcatel-Lucent; R2-163716, "Discussion on terminology of beamforming based high frequency NR", Samsung; R2-162709, "Beam support in NR", Intel; R2-162762, "Active Mode Mobility in NR: SINR drops in higher frequencies", Ericsson; R3-160947, "TR 38.801 V0.1.0, Study on New Radio Access Technology; Radio Access Architecture and Interfaces"; R2-164306, "Summary of email discussion [93bis#23][NR] Deployment scenarios", NTT DOCOMO; 3GPP RAN2#94 meeting minute; R2-163879, "RAN2 Impacts in HF-NR", MediaTeK; R2-162210, "Beam level management <-> Cell level mobility", Samsung; R2-163471, "Cell concept in NR", CATT; R2-164270, "General considerations on LTE-NR tight interworking", Huawei; R2-162251, "RAN2 aspects of high frequency New RAT", Samsung; R1-165364, "Support for Beam Based Common Control Plane", Nokia, Alcatel-Lucent Shanghai Bell; TS 36.300 v13.3.0. "E-UTRA and E-UTRAN; Overall description; Stage 2"; TS 36.331 v13.1.0, "E-UTRA; RRC protocol specification (Release 13)"; TS 36.304 v13.1.0, "E-UTRA; UE procedures in idle mode (Release 13)"; and R2-162226, "Discussion on Beam Measurement and Tracking for 5G New Radio Interface in mmWave Frequency Bands", Samsung.

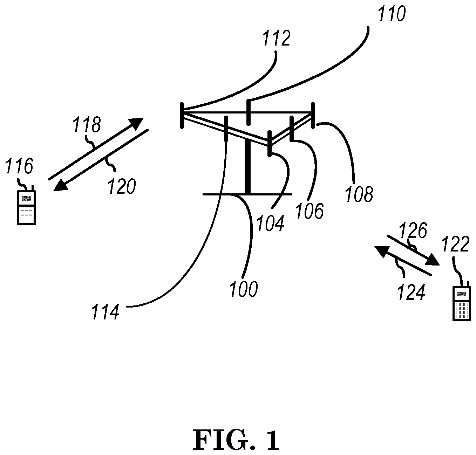

FIG. 1 shows a multiple access wireless communication system according to one embodiment not covered by the claimed invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

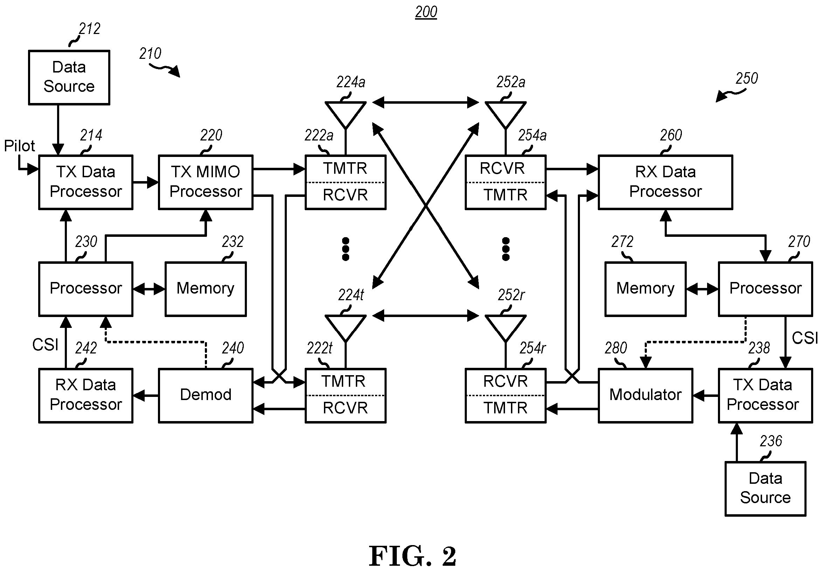

FIG. 2 is a simplified block diagram of an embodiment of a transmitter system 210 (also known as the access network) and a receiver system 250 (also known as access terminal (AT) or user equipment (UE)) in a MIMO system 200, which is not covered by the claimed invention. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

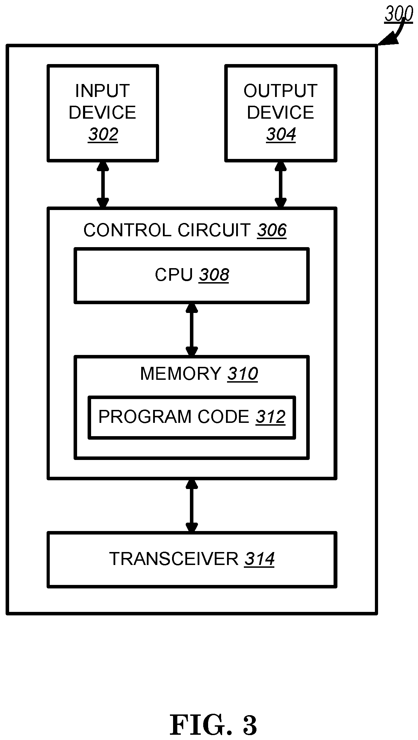

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 includes an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

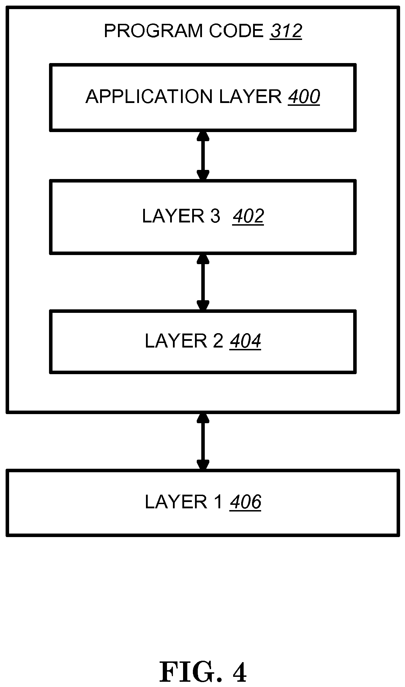

FIG. 4 is a simplified block diagram of the program code 312 shown in FIG. 3 in accordance with one embodiment not covered by the claimed invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP standardization activities on next generation (i.e., 5G) access technology have been launched since March 2015. In general, the next generation access technology aims to support the following three families of usage scenarios for satisfying both the urgent market needs and the more long-term requirements set forth by the ITU-R IMT-2020:

- eMBB (enhanced Mobile Broadband)

- mMTC (massive Machine Type Communications)

- URLLC (Ultra-Reliable and Low Latency Communications).

An objective of the 5G study item on new radio access technology is to identify and develop technology components needed for new radio systems which should be able to use any spectrum band ranging at least up to 100 GHz. Supporting carrier frequencies up to 100GHz brings a number of challenges in the area of radio propagation. As the carrier frequency increases, the path loss also increases.

Based on 3GPP R2-162366, in lower frequency bands (e.g.. current LTE bands < 6GHz) the required cell coverage may be provided by forming a wide sector beam for transmitting downlink common channels. However, utilizing wide sector beam on higher frequencies (>> 6GHz), the cell coverage is reduced with same antenna gain. Thus, in order to provide required cell coverage on higher frequency bands, higher antenna gain is needed to compensate for the increased path loss. To increase the antenna gain over a wide sector beam, larger antenna arrays (number of antenna elements ranging from tens to hundreds) are used to form high gain beams.

As a consequence, the high gain beams are narrow compared to a wide sector beam such that multiple beams for transmitting downlink common channels are needed to cover the required cell area. The number of concurrent high gain beams that an access point could form may be limited by the cost and complexity of the utilized transceiver architecture. In practice, on higher frequencies, the number of concurrent high gain beams is much less than the total number of beams required to cover the cell area. In other words, the access point is able to cover only part of the cell area by using a subset of beams at any given time.

Based on 3GPP R2-163716, beamforming is generally a signal processing technique used in antenna arrays for directional signal transmission/reception. With beamforming, a beam can be formed by combining elements in a phased array of antennas in such a way that signals at particular angles experience constructive interference while others experience destructive interference. Different beams can be utilized simultaneously using multiple arrays of antennas.

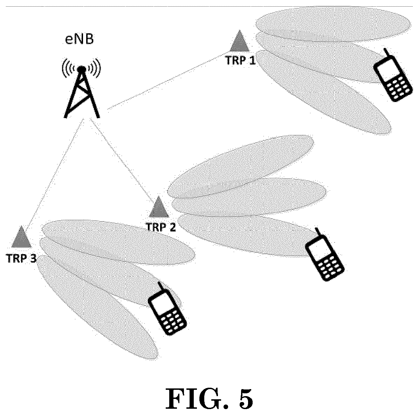

Based on 3GPP R2-162709 and as shown in FIG. 5, an evolved Node B (eNB) may have multiple TRPs (Transmission/Reception Points) either centralized or distributed. Each TRP can form multiple beams. The number of beams and the number of simultaneous beams in the time/frequency domain depend on the number of antenna array elements and the RF at the TRP.

Potential mobility type for NR can be listed:

• Intra-TRP mobility

• Inter-TRP mobility

• Inter-NR eNB mobility

Based on 3GPP R2-162762, reliability of a system purely relying on beamforming and operating in higher frequencies might be challenging since the coverage might be more sensitive to both time and space variations. Consequently, the SINR (Signal to Interference plus Noise Ratio) of the narrow link can drop much quicker than in the case of LTE.

Using antenna arrays at access nodes with the number of elements in the hundreds, fairly regular grid-of-beams coverage patterns with tens or hundreds of candidate beams per node may be created. The coverage area of an individual beam from such array may be small, in some cases down to the order of some tens of meters in width. As a consequence, channel quality degradation outside the current serving beam area is quicker than in the case of wide area coverage, as provided by LTE.

According to 3GPP TS 36.331, a measurement report provided from a UE to network could include the UE's measurement result about its serving cell and neighbor cells:

```
MeasResults ::=                         SEQUENCE {
        measId                          MeasId,
        measResultPCell                 SEQUENCE {
                rsrpResult                      RSRP-Range,
                rsrqResult                      RSRQ-Range
        },
        measResultNeighCells            CHOICE {
                measResultListEUTRA             MeasResultListEUTRA,
                measResultListUTRA              MeasResultListUTRA,
                measResultListGERAN             MeasResultListGERAN,
                measResultsCDMA2000             MeasResultsCDMA2000,
                ...
        }                                               OPTIONAL,
        ...,
```

| *MeasResults* field descriptions |
| --- |
| *measResult* <br> Measured result of an E-UTRA cell; <br> Measured result of a UTRA cell; <br> Measured result of a GERAN cell or frequency; <br> Measured result of a CDMA2000 cell; <br> Measured result of a WLAN. <br> Measured result of UE Rx-Tx time difference; <br> Measured result of UE SFN, radio frame and subframe timing difference; or <br> Measured result of RSSI and channel occupancy. |
| *measResultListCDMA2000* <br> List of measured results for the maximum number of reported best cells for a CDMA2000 measurement identity. |
| *measResultListEUTRA* <br> List of measured results for the maximum number of reported best cells for an E-UTRA measurement identity. |
| *measResultListGERAN* <br> List of measured results for the maximum number of reported best cells or frequencies for a GERAN measurement identity. |
| *measResultListUTRA* <br> List of measured results for the maximum number of reported best cells for a UTRA measurement identity. |
| *measResultListWLAN* <br> List of measured results for the maximum number of reported best WLAN outside the WLAN mobility set and connected WLAN, if any, for a WLAN measurement identity. |
| *measResultPCell* <br> Measured result of the PCell. |

| _MeasResults_ field descriptions |
| --- |
| **measResultsCDMA2000**<br>Contains the CDMA2000 HRPD pre-registration status and the list of CDMA2000 measurements. |
| _rsrpResult_<br>Measured RSRP result of an E-UTRA cell.<br>The rsrpResult is only reported if configured by the eNB. |
| _rsrqResult_<br>Measured RSRQ result of an E-UTRA cell.<br>The rsrqResult is only reported if configured by the eNB. |

For LTE, cell selection and cell reselection are specified in 3GPP TS 36.304 as follows:

**Camped on a cell:** UE has completed the cell selection/reselection process and has chosen a cell. The UE monitors system information and (in most cases) paging information.

**Serving cell:** The cell on which the UE is camped.

**Suitable Cell:** This is a cell on which an UE may camp. For a E-UTRA cell, the criteria are defined in subclause 4.3, for a UTRA cell in [8], and for a GSM cell the criteria are defined in [9].

**Suitable Cell:**

A "suitable cell" is a cell on which the UE may camp on to obtain normal service. The UE shall have a valid USIM and such a cell shall fulfil all the following requirements.

- The cell is part of either:

    - the selected PLMN, or:

    - the registered PLMN, or:

    - a PLMN of the Equivalent PLMN list

- For a CSG cell, the cell is a CSG member cell for the UE;

According to the latest information provided by NAS:

- The cell is not barred, see subclause 5.3.1;

- The cell is part of at least one TA that is not part of the list of "forbidden tracking areas for roaming" [4], which belongs to a PLMN that fulfils the first bullet above;

- The cell selection criteria are fulfilled, see subclause 5.2.3.2;

If more than one PLMN identity is broadcast in the cell, the cell is considered to be part of all TAs with TAIs constructed from the PLMN identities and the TAC broadcast in the cell.
[...]

**5.2.1 Introduction**

UE shall perform measurements for cell selection and reselection purposes as specified in [10].
The NAS can control the RAT(s) in which the cell selection should be performed, for instance by indicating RAT(s) associated with the selected PLMN, and by maintaining a list of forbidden registration area(s) and a list of equivalent PLMNs. The UE shall select a suitable cell based on idle mode measurements and cell selection criteria.
In order to speed up the cell selection process, stored information for several RATs may be available in the UE.

When camped on a cell, the UE shall regularly search for a better cell according to the cell reselection criteria. If a better cell is found, that cell is selected. The change of cell may imply a change of RAT. Details on performance requirements for cell reselection can be found in [10].

The NAS is informed if the cell selection and reselection results in changes in the received system information relevant for NAS.

For normal service, the UE shall camp on a suitable cell, tune to that cell's control channel(s) so that the UE can:

- Receive system information from the PLMN; and

  - receive registration area information from the PLMN, e.g., tracking area information; and

  - receive other AS and NAS Information; and

- if registered:

  - receive paging and notification messages from the PLMN; and

  - initiate transfer to connected mode.

[...]

### 5.2.3.2 Cell Selection Criterion

The cell selection criterion S in normal coverage is fulfilled when:
Srxlev > 0 AND Squal > 0
where:

$$Srxlev = Q_{rxlevmeas} - (Q_{rxlevmin} + Q_{rxlevminoffset}) - Pcompensation - Qoffset_{temp}$$

$$Squal = Q_{qualmeas} - (Q_{qualmin} + Q_{qualminoffset}) - Qoffset_{temp}$$

where:

| | |
|---|---|
| Srxlev | Cell selection RX level value (dB) |
| Squal | Cell selection quality value (dB) |
| $Qoffset_{temp}$ | Offset temporarily applied to a cell as specified in [3] (dB) |
| $Q_{rxlevmeas}$ | Measured cell RX level value (RSRP) |
| $Q_{qualmeas}$ | Measured cell quality value (RSRQ) |
| $Q_{rxievmin}$ | Minimum required RX level in the cell (dBm) |
| $Q_{qualmin}$ | Minimum required quality level in the cell (dB) |
| $Q_{rxlevminoffset}$ | Offset to the signalled $Q_{rxlevmin}$ taken into account in the Srxlev evaluation as a result of a periodic search for a higher priority PLMN while camped normally in a VPLMN [5] |
| $Q_{qualminoffset}$ | Offset to the signalled $Q_{qualmin}$ taken into account in the Squal evaluation as a result of a periodic search for a higher priority PLMN while camped normally in a VPLMN [5] |
| Pcompensation | If the UE supports the *additionalPmax* in the NS-*PmaxList,* if present, in SIB1, SIB3 and SIB5: $max(P_{EMAX1} - P_{PowerClass}, 0) - (min(PEMAX2, P_{PowerClass}) - min(P_{EMAX1}, P_{PowerClass}))$ (dB); else: $max(P_{EMAX1} - P_{PowerClass}, 0)$ (dB); |
| $P_{EMAX1}, P_{EMAX2}$ | Maximum TX power level an UE may use when transmitting on the uplink in the cell (dBm) defined as $P_{EMAX}$ in [TS 36.101]. $P_{EMAX1}$ and $P_{EMAX2}$ are obtained from the *p-Max* and the *NS-PmaxList* respectively in SIB1, SIB3 and SIB5 as specified in TS 36.331 [3]. |

(continued)

| P_PowerClass | Maximum RF output power of the UE (dBm) according to the UE power class as defined in [TS 36.101] |
|---|---|

[...]

### 5.2.4.1 Reselection priorities handling

Absolute priorities of different E-UTRAN frequencies or inter-RAT frequencies may be provided to the UE in the system information, in the *RRCConnectionRelease* message, or by inheriting from another RAT at inter-RAT cell (re)selection. In the case of system information, an E-UTRAN frequency or inter-RAT frequency may be listed without providing a priority (i.e. the field *cellReselectionPriority* is absent for that frequency). If priorities are provided in dedicated signalling, the UE shall ignore all the priorities provided in system information. If UE is in *camped on any cell* state, UE shall only apply the priorities provided by system information from current cell, and the UE preserves priorities provided by dedicated signalling and *deprioritisationReq* received in *RRCConnectionReject* unless specified otherwise. When the UE in *camped normally* state, has only dedicated priorities other than for the current frequency, the UE shall consider the current frequency to be the lowest priority frequency (i.e. lower than any of the network configured values).

[...]

### 5.2.4.6 Intra-frequency and equal priority inter-frequency Cell Reselection criteria

The cell-ranking criterion $R_s$ for serving cell and $R_n$ for neighbouring cells is defined by:

$$R_s = Q_{meas,s} + Q_{Hyst} - Qoffset_{temp}$$

$$R_n = Q_{meas,n} - Qoffset - Qoffset_{temp}$$

where:

| Qmeas | RSRP measurement quantity used in cell reselections. |
|---|---|
| Qoffset | For intra-frequency: Equals to $Qoffset_{s,n}$, if $Qoffset_{s,n}$ is valid, otherwise this equals to zero. For inter-frequency: Equals to $Qoffset_{s,n}$ plus $Qoffset_{frequency}$, if $Qoffset_{s,n}$ is valid, otherwise this equals to $Qoffset_{frequency}$. |
| Qoffset_temp | Offset temporarily applied to a cell as specified in [3] |

The UE shall perform ranking of all cells that fulfil the cell selection criterion S, which is defined in 5.2.3.2, but may exclude all CSG cells that are known by the UE not to be CSG member cells.

The cells shall be ranked according to the R criteria specified above, deriving $Q_{meas,n}$ and $Q_{meas,s}$ and calculating the R values using averaged RSRP results.

If a cell is ranked as the best cell the UE shall perform cell reselection to that cell. If this cell is found to be not-suitable, the UE shall behave according to subclause 5.2.4.4.

In all cases, the UE shall reselect the new cell, only if the following conditions are met:

- the new cell is better ranked than the serving cell during a time interval $Treselection_{RAT}$;

- more than 1 second has elapsed since the UE camped on the current serving cell.

### 5.2.4.7 Cell reselection parameters in system information broadcasts

Cell reselection parameters are broadcast in system information and are read from the serving cell as follows:

**cellReselectionPriority**

This specifies the absolute priority for E-UTRAN frequeny or UTRAN frequency or group of GERAN frequencies or band class of CDMA2000 HRPD or band class of CDMA2000 1xRTT.

**cellReselectionSubPriority**

This specifies the fractional priority value added to cellReselectionPriority for E-UTRAN frequency.

**$Qoffset_{s,n}$**

This specifies the offset between the two cells.

**$Qoffset_{frequency}$**

Frequency specific offset for equal priority E-UTRAN frequencies.

**$Qoffset_{temp}$**

This specifies the additional offset to be used for cell selection and re-selection. It is temporarily used in case the RRC Connection Establishment fails on the cell as specified in [3].

**$Q_{hyst}$**

This specifies the hysteresis value for ranking criteria.

**$Q_{qualmin}$**

This specifies the minimum required quality level in the cell in dB.

**Qrxlevmin**

This specifies the minimum required Rx level in the cell in dBm.

**RedistributionFactorFreq**

This specifies the redistribution factor for a neighbour E-UTRAN frequency.

**RedistributionFactorCell**

This specifies the redistribution factor for a neighbour E-UTRAN cell.

**RedistributionFactorServing**

This specifies the redistribution factor for serving cell or serving frequency.

**$Treselection_{RAT}$**

This specifies the cell reselection timer value. For each target E-UTRA frequency and for each RAT (other than E-UTRA) a specific value for the cell reselection timer is defined, which is applicable when evaluating reselection within E-UTRAN or towards other RAT (i.e. $Treselection_{RAT}$ for E-UTRAN is $Treselection_{EUTRA}$, for UTRAN $Treselection_{UTRA}$ for GERAN $Treselection_{GERA}$, for $Treselection_{CDMA\_HRPD}$, and for $Treselection_{CDMA\_1\times RTT}$).
Note: $Treselection_{RAT}$ is not sent on system information, but used in reselection rules by the UE for each RAT.

**$Treselection_{EUTRA\_CE}$**

This specifies the cell reselection timer value $Treselection_{RAT}$ for E-UTRAN UE in enhanced coverage among same priority cell. The parameter can be set per E-UTRAN frequency.

**Treselection$_{EUTRA}$**

This specifies the cell reselection timer value Treselection$_{RAT}$ for E-UTRAN. The parameter can be set per E-UTRAN frequency [3].

**Treselection$_{UTRA}$**

This specifies the cell reselection timer value Treselection$_{RAT}$ for UTRAN.

**Treselection$_{GERA}$**

This specifies the cell reselection timer value Treselection$_{RAT}$ for GERAN.

**Treselection$_{CDMA\_HRPD}$**

This specifies the cell reselection timer value Treselection$_{RAT}$ for CDMA HRPD.

**Treselection$_{CDMA\_1\times RTT}$**

This specifies the cell reselection timer value Treselection$_{RAT}$ for CDMA 1xRTT.

**Thresh$_{X, HighP}$**

This specifies the Srxlev threshold (in dB) used by the UE when reselecting towards a higher priority RAT/ frequency than the current serving frequency. Each frequency of E-UTRAN and UTRAN, each group of GERAN frequencies, each band class of CDMA2000 HRPD and CDMA2000 1xRTT might have a specific threshold.

**Thresh$_{X, HighQ}$**

This specifies the Squal threshold (in dB) used by the UE when reselecting towards a higher priority RAT/ frequency than the current serving frequency. Each frequency of E-UTRAN and UTRAN FDD might have a specific threshold.

**Thresh$_{X, LowP}$**

This specifies the Srxlev threshold (in dB) used by the UE when reselecting towards a lower priority RAT/ frequency than the current serving frequency. Each frequency of E-UTRAN and UTRAN, each group of GERAN frequencies, each band class of CDMA2000 HRPD and CDMA2000 1xRTT might have a specific threshold.

**Thresh$_{X, LowQ}$**

This specifies the Squal threshold (in dB) used by the UE when reselecting towards a lower priority RAT/ frequency than the current serving frequency. Each frequency of E-UTRAN and UTRAN FDD might have a specific threshold.

**Thresh$_{Serving, LowP}$**

This specifies the Srxlev threshold (in dB) used by the UE on the serving cell when reselecting towards a lower priority RAT/ frequency.

**Thresh$_{Serving, LowQ}$**

This specifies the Squal threshold (in dB) used by the UE on the serving cell when reselecting towards a lower priority RAT/ frequency.

**S$_{IntraSearchP}$**

This specifies the Srxlev threshold (in dB) for intra-frequency measurements.

**S<sub>IntraSearchQ</sub>**

**S$_{IntraSearchQ}$**

This specifies the Squal threshold (in dB) for intra-frequency measurements.

**S$_{nonIntraSearchP}$**

This specifies the Srxlev threshold (in dB) for E-UTRAN inter-frequency and inter-RAT measurements.

**S$_{nonIntraSearchQ}$**

This specifies the Squal threshold (in dB) for E-UTRAN inter-frequency and inter-RAT measurements.

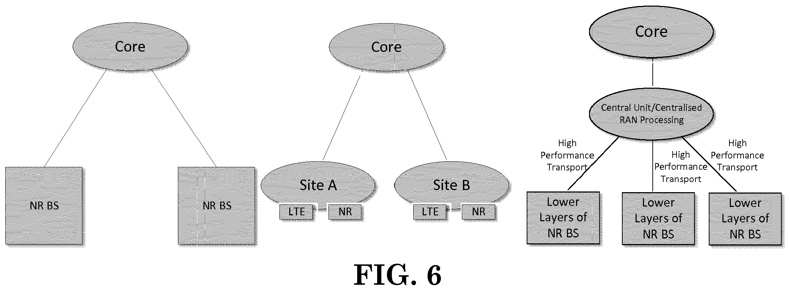

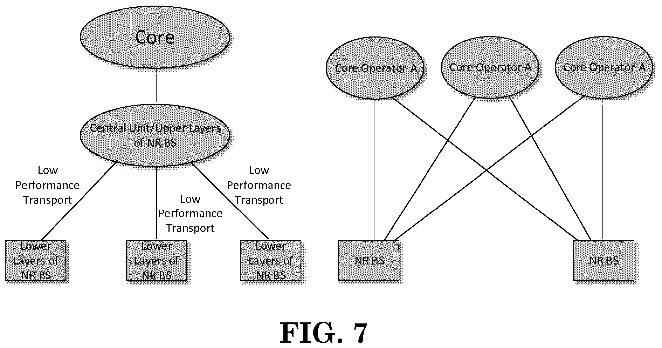

Based on 3GPP R3-160947, the scenarios illustrated in FIGS. 6 and 7, which are not covered by the claimed invention, should be considered for support by the NR (New Radio Access Technology) radio network architecture. FIG. 6 generally illustrates a scenario of stand-alone, co-sited with LTE, and centralized baseband. FIG. 7 generally illustrates a scenario of centralized with low performance transport and shared RAN (Radio Access Network).

Based on 3GPP R2-164306, the following scenarios in terms of cell layout for standalone NR are captured to be studied:

- Macro cell only deployment

- Heterogeneous deployment

- Small cell only deployment

Based on the 3GPP RAN2#94 meeting minute, one NR eNB corresponds to one or many TRPs. Two levels of network controlled mobility as follows:

- RRC driven at "cell" level.

- Zero/Minimum RRC involvement (e.g., at MAC /PHY)

Based on 3GPP R2-162210, the following principles of 2-level mobility handling may possibly be kept in 5G:

  A) Cell level mobility

    a. Cell selection/reselection in IDLE, handover in CONN

    b. Handled by RRC in CONN state

  B) Beam level management

    a. L1 handles appropriate selection of the TRP to use for a UE and the optimal beam direction

5G systems are expected to rely more heavily on "beam based mobility" to handle UE mobility, in addition to regular handover based UE mobility. Technologies like MIMO (Multiple Input Multiple Output), fronthauling, C-RAN (Cloud RAN), and NFV (Network Function Virtualization) will allow the coverage area controlled by one "5G Node" to grow, thus increasing the possibilities for beam level management and reducing the need for cell level mobility. All mobility within the coverage area of one 5G node could in theory be handled based on beam level management, which would leave handovers only to be used for mobility to the coverage area of another 5G Node.

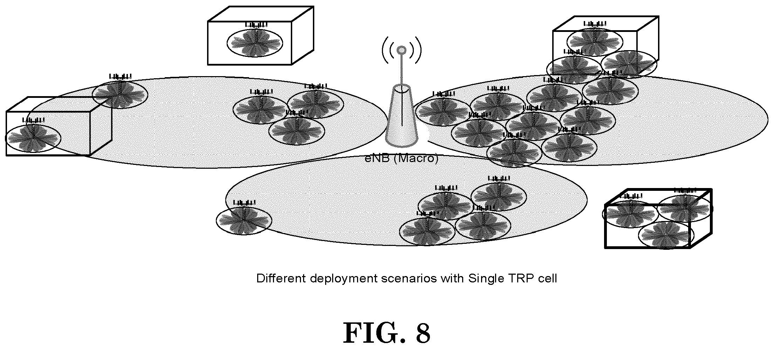

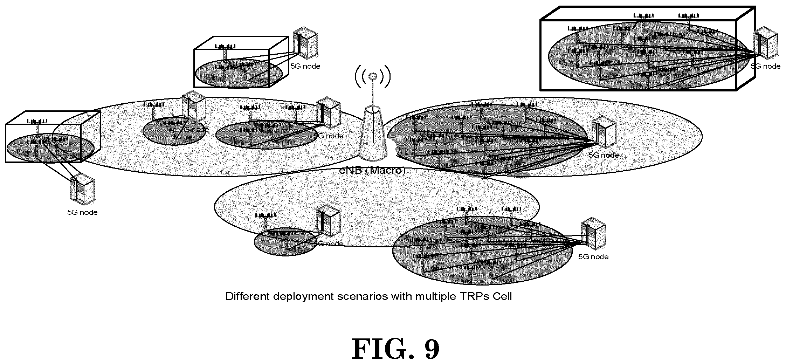

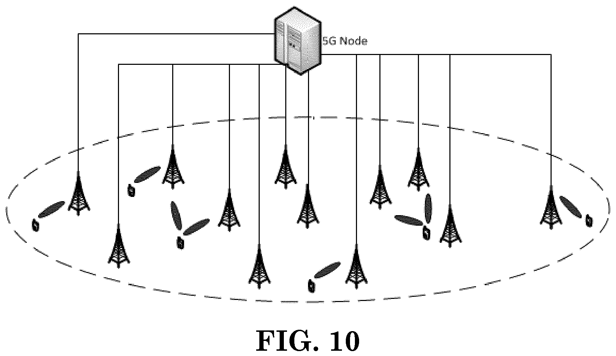

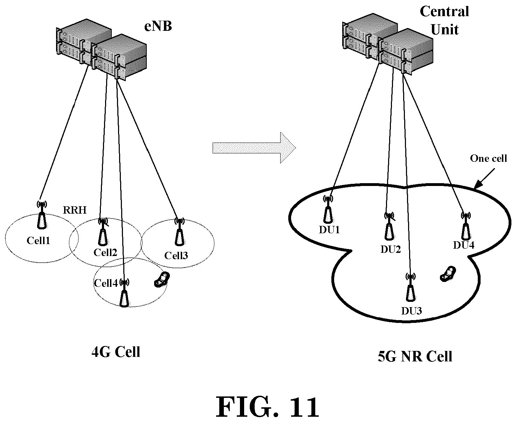

FIGS. 8 to 11 show some examples of the concept of a cell in 5G NR, which is not covered by the claimed invention. FIG. 8 generally illustrates a deployment with single TRP cell. FIG. 9 generally shows a deployment with multiple TRP cell. FIG. 10 generally illustrates one 5G cell comprising a 5G node with multiple TRPs. FIG. 11 generally shows a comparison between a LTE cell and a NR cell.

Apart from the handover based on RRM (Radio Resource Management) measurement, a 5G UE should be able to adapt the serving beam to maintain 5G connectivity subject to beam quality fluctuation or UE intra-cell mobility. In order to do that, 5G Node-B and UE should be able to track and change the serving beam properly (called beam tracking hereafter).

*Terminology & assumption* - The following terminology and assumption may be used hereafter.

- **BS:** A network central unit in NR which is used to control one or multiple TRPs which are associated with one or multiple cells. Communication between BS and TRP(s) is via fronthaul. BS could also be referred to as central unit (CU), eNB, or NodeB.

- **TRP:** A transmission and reception point provides network coverage and directly communicates with UEs. TRP could also be referred to as distributed unit (DU).

- **Cell:** A cell is composed by one or multiple associated TRPs. In other words, coverage of the cell is composed by coverage of all associated TRP(s). One cell is controlled by one BS. A cell could also be referred to as TRP group (TRPG).

- **Beam sweeping:** In order to cover all possible directions for transmission and/or reception, a number of beams is required. Since it is not possible to generate all these beams concurrently, beam sweeping means to generate a subset of these beams in one time interval and change generated beam(s) in other time interval(s), i.e., changing beam in time domain. So, all possible directions can be covered after several time intervals.

- **Beam sweeping number:** This is the necessary number of time interval(s) to sweep beams in all possible directions once for transmission and/or reception. In other words, a signaling applying beam sweeping would be transmitted "beam sweeping number" of times within one time period, e.g., the signaling is transmitted in (at least partially) different beam(s) in different times of the time period.

For network side:

- NR using beamforming could be standalone, i.e., UE can directly camp on or connect to NR.
  - NR using beamforming and NR not using beamforming could coexist, e.g., in different cells.

- TRP would apply beamforming to both data and control signaling transmissions and receptions, if possible and beneficial.

  - Number of beams generated concurrently by TRP depends on TRP capability, e.g., maximum number of beams generated concurrently by different TRPs in the same cell may be the same and those in different cells may be different.

  - Beam sweeping is necessary, e.g., for the control signaling to be provided in every direction.

- Downlink timing of TRPs in the same cell are synchronized.

- RRC layer of network side is in BS.

- TRP should support both UEs with UE beamforming and UEs without UE beamforming, e.g., due to different UE capabilities or UE releases.

For UE side:

- UE may perform beamforming for reception and/or transmission, if possible and beneficial.

  - Number of beams generated concurrently by UE depends on UE capability, e.g., generating more than one beam is possible.

  - Beam(s) generated by UE is wider than beam(s) generated by eNB.

  - Beam sweeping for transmission and/or reception is generally not necessary for user data but may be necessary for other signaling, e.g. to perform measurement.

  - Not every UE supports UE beamforming, e.g. due to UE capability or UE beamforming is not supported in NR first (few) release(s).

- One UE is possible to be served by multiple beams from one or multiple TRPs of the same cell.

- Same or different DL data could be transmitted on the same radio resource via different serving beams for diversity or throughput gain.

- There are at least two UE (RRC) states: connected state (or called active state) and non-connected state (or called inactive state or idle state).

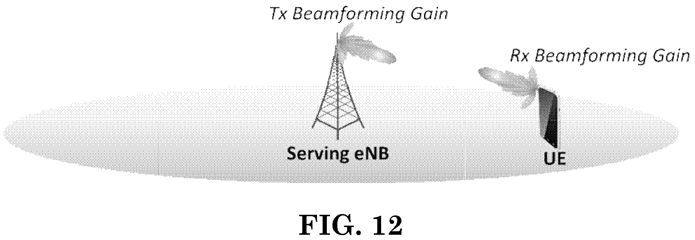

*UE beamforming* - Based on 3GPP R2-162251, to use beamforming in both eNB and UE sides, practically, antenna gain by beamforming in eNB is considered about 15 to 30 dBi and the antenna gain of UE is considered about 3 to 20 dBi. Figure 3 of 3GPP R2-162251 is reproduced as FIG. 12 to illustrate gain compensation by beamforming, which is not covered by the claimed invention.

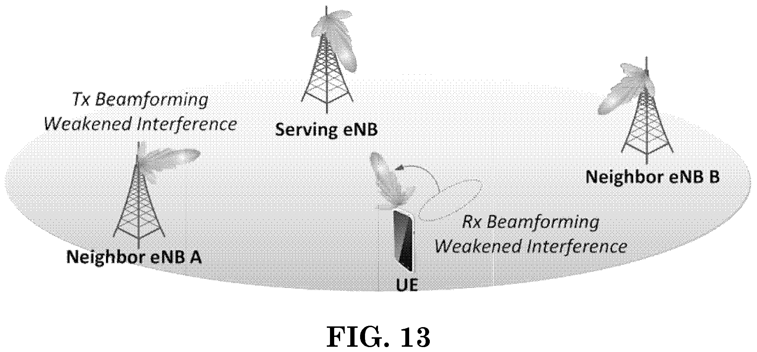

From SINR's perspective, sharp beamforming reduces interference power from neighbor interferers, i.e., neighbor eNBs in the downlink case or other UEs connected to neighbor eNBs. In the TX (Transmission) beamforming case, only interference from other TXs whose current beam points the same direction to the RX (Reception) will be the "effective" interference. The "effective" interference means that the interference power is higher than the effective noise power. In the RX beamforming case, only interference from other TXs whose beam direction is the same to the UE's current RX beam direction will be the effective interference. Figure 4 of 3GPP R2-162251 is reproduced as FIG. 13 to illustrate weakened interference by beamforming, which is not covered by the claimed invention.

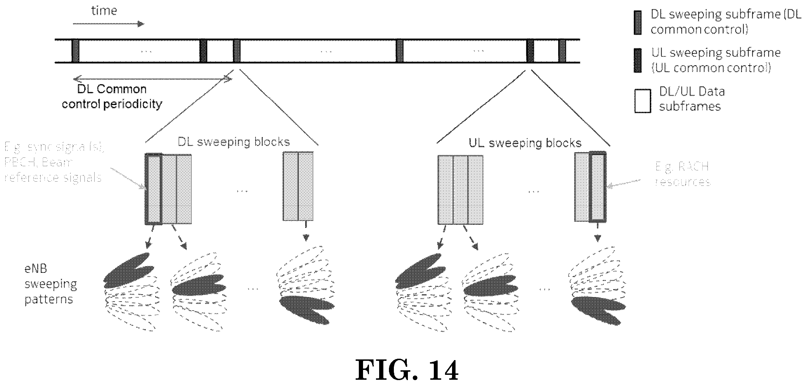

*Sweeping subframe* - 3GPP R1-165364 proposed to concentrate sweeping common control plane functionality into specific subframes, called sweeping subframes. The common control signaling to be transmitted in sweeping subframe includes synchronization signal (DL), reference signal (DL), system information (DL), random access channel (UL), etc. Figure 1 of 3GPP R1-165364 is reproduced as FIG. 14 to illustrate the principle of sweeping subframe, which is not covered by the claimed invention.

One of the main use cases of downlink sweeping is downlink discovery signalling, which comprises for instance signals for cell search, time and frequency synchronization acquisition, essential system information signalling and cell/beam measurements (e.g., RRM (Radio Resource Management) measurements).

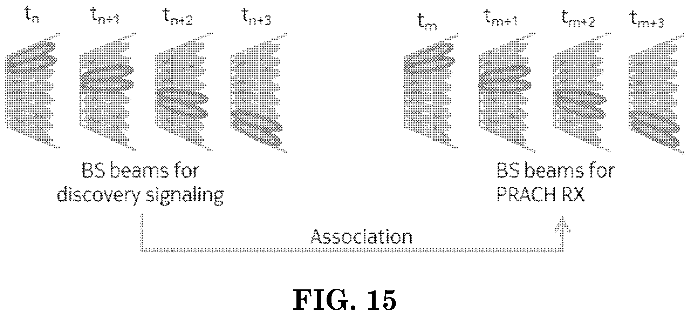

For UL (Uplink) PRACH (Physical Random Access Channel), the high level idea is to utilize BS beam(s) reciprocity and enable a UE to transmit PRACH preamble when a BS is receiving using beam(s) with high array gain towards the transmitting UE. That means the PRACH resources are associated with the BS beam(s) which are advertised periodically through DL (Downlink) discovery signalling, which conveys beam specific reference signals. Figure 2 of 3GPP R1-165364 is reproduced as FIG. 15 to illustrate the association between BS beams and PRACH resources, which is not covered by the claimed invention.

*Initial access* - After a UE powers on, the UE needs to find a cell to camp on. Then, the UE may initiate a connection establishment to a network by itself for registration and/or data transmission. The network could also request the UE to initiate a connection establishment to the network via paging, e.g., in order to transmit DL data to the UE.

An exemplary initial access may have the following steps:

- **Cell search** - Possible carrier frequencies are scanned to find a cell. The cell provides signaling for UEs to identify the cell, e.g. synchronization signal, by beam sweeping. Different TRPs of the same cell would provide the same signaling at the same time interval(s).

- **Broadcasted system information acquisition** - UE acquires necessary parameters (e.g., related to cell selection) from broadcasted system information. The broadcasted system information is provided by beam sweeping.

- **Cell measurement & selection** - After the UE finds a cell which is possible to camp on, the UE should measure the radio condition of the cell and decide whether to camp on the cell based on the measured result. The cell provides signaling for measurement (e.g., reference signal) by beam sweeping. Different TRPs of the same cell would provide the signaling at the same time interval(s).

- **Paging** - Paging may be required when network would like to transmit UE specific signaling/data and the UE is in non-connected state. When the UE receives paging, the UE should initiate connection establishment to enter connected state for reception. The cell provides paging by beam sweeping.

- **Connection establishment** - UE establishes connection to BS via connection establishment procedure. During the procedure, the UE needs to perform random access procedure to let network be aware of the UE and provide resources for UL transmission to UE.

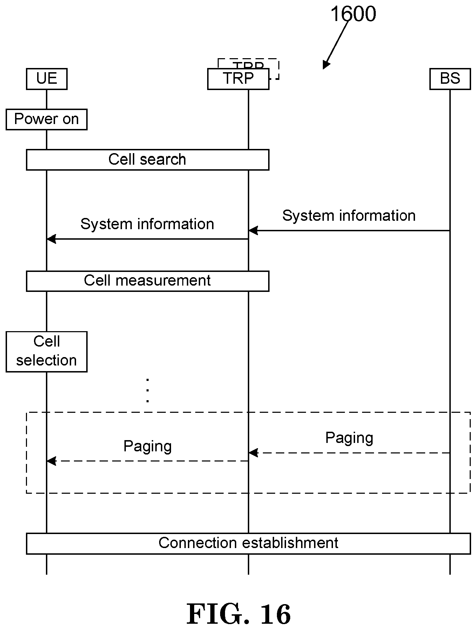

FIG. 16 illustrates an exemplary flow chart 1600 for initial access, which is not covered by the claimed invention.

*Mobility in non-connected state* - After the UE camps on a cell, the UE may move among different beams or TRPs of the cell when the UE is in non-connected state (e.g., idle mode). Or the UE may leave the coverage of the cell and move to coverage of another cell.

An example of mobility for UE in non-connected state may have the following types:

- **UE beam change** - If UE beamforming is used when the UE is in non-connected state, UE beam(s) may be changed (e.g., due to UE rotation). UE should keep performing beam sweeping to prevent signaling missing due to UE beam(s) change.

- **Serving beam or serving TRP change among the same cell** - In the cell that the UE camps on, the UE is served by TRP(s) who's signaling can be received by the UE. Serving beam(s) of serving TRP(s) may change due to UE mobility. Serving TRP(s) may also change when the UE is moving within camped on cell. The UE should keep monitoring all possible time intervals for different beams of serving TRP(s), which provides necessary signaling for UEs in non-connected state, to avoid missing signaling.

- **Cell reselection** - The UE keeps performing measurement on the serving cell where the UE camps on and its neighbor cells, and evaluates whether to reselect the serving cell. The UE acquires system information of a neighbor cell and reselects the neighbor cell as the new serving cell if the UE determines that the neighbor cell is more optimal. Parameters for evaluation from network are required.

*Mobility in connected state without cell change* - When the UE is in connected state, the UE may move among different beams or TRPs of the same serving cell. Besides, if UE beamforming is used, UE beam(s) may also change over time (e.g., due to UE rotation).

An example of mobility in connected state without cell change may have the following steps:

- **Signaling for change detection** - Change of UE beam(s), serving beam(s) of serving TRP(s), and serving TRP(s) may be detected by UE and/or network. In order to detect the change, a signaling periodically transmitted by TRP(s) or UE could be used. TRP(s) periodically performs beam sweeping for reception or transmission of the signaling. If UE beamforming is used, the UE would periodically perform beam sweeping for reception or transmission of the signaling.

- **UE beam change** - If the change is detected by the UE, the UE itself may select proper UE beam(s) for the following reception (and transmission, e.g., for TDD). Alternatively, the UE needs to provide feedback to network and network could provide an indication of UE beam change from network to the UE. If the change is detected by network, indication of UE beam change from network to the UE may be required. The UE uses UE beam(s) indicated by network for the following transmission (and reception, e.g., for TDD).

- **Serving beam and/or serving TRP change** - After the UE receives the signaling for change detection, the UE needs to provide feedback to network and network could decide whether to change (DL) serving beam(s) and/or serving TRP(s) for the UE. On the other hand, after TRP(s) receives the signaling for change detection, network could decide whether to change serving beam(s) and/or serving TRP(s) for the UE.

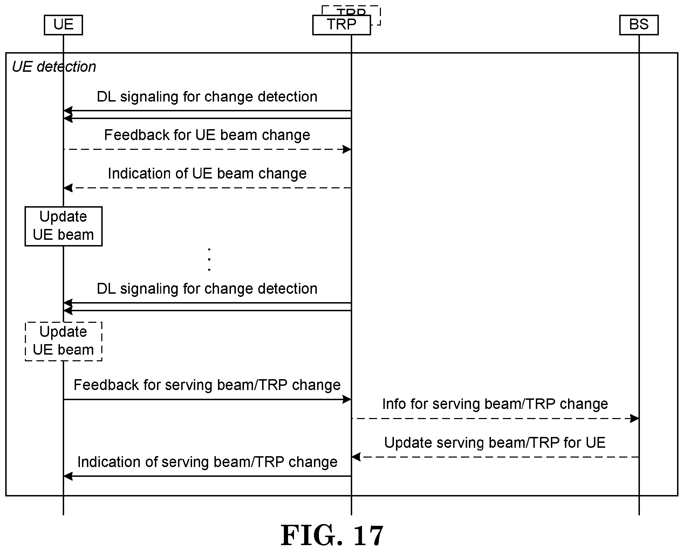

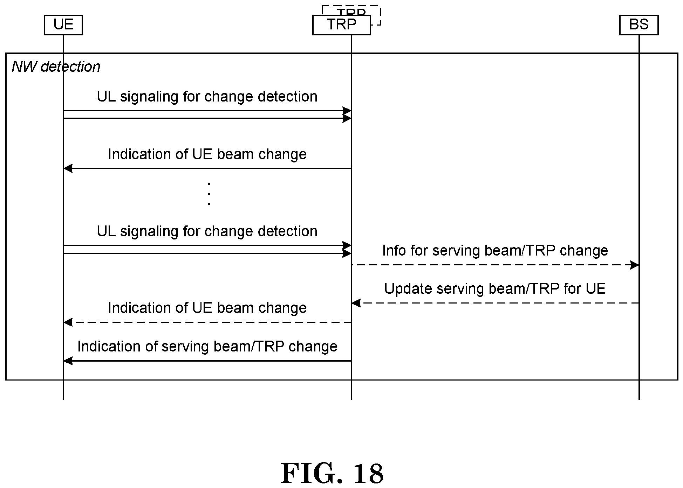

FIGS. 17 and 18 are exemplary flow charts 1700 and 1800 for mobility in connected state without cell change, which are not covered by the claimed invention.

*Mobility in connected state with cell change* - When the UE is in connected state, the UE may leave the coverage of the serving cell and move to coverage of other cell. The UE may need to perform measurement in order to help detection of cell change. Network may control the change of UE's serving cell, e.g., via handover.

An example of mobility in connected state with cell change may have the following steps:

**Measurement** - The UE performs measurement on the serving cell and its neighbor cells to find better serving cell based on measurement configuration. The signaling to be measured may be provided by beam sweeping. If UE beamforming is used, the UE would perform beam sweeping for reception of the signaling. In addition, radio quality of serving cell may be kept monitored by the UE in order to detect radio link failure.

**Measurement report** - Based on the measurement result, the UE provides a measurement report to serving BS.

**Handover initiation** - Based on the measurement report, the serving BS may decide to handover the UE to a target cell of neighbor BS based on negotiation between the serving BS and neighbor BS. Then, the serving BS would transmit a handover commend indicating a target cell to the UE.

**Handover to target cell** - The UE attempts to connect to the target cell for continuing the ongoing services. If 0 ms mobility interruption is required, connection between UE and source cell may be kept when the UE tries to connect to the target cell. Connection can be released after UE successfully accesses the target cell.

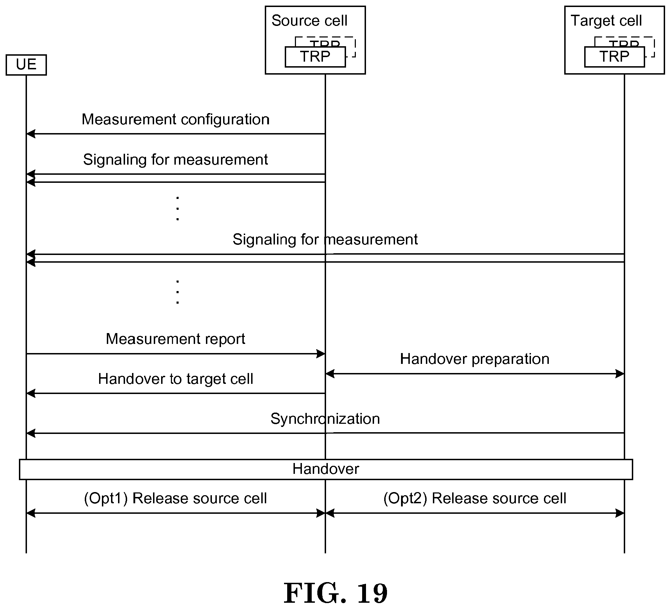

FIG. 19 illustrates an exemplary flow chart 1900 for mobility in connected state with cell change, which is not covered by the claimed invention.

**Measurement report** - Since measurement report could be used to help network decide addition or modification of serving cell(s) for the UE, content of the report should provide sufficient information for network (e.g., serving BS) to compare different neighbor cells in order to select one or multiple as serving cell(s) for the UE.

3GPP R2-162226 mentioned that a UE can trigger a measurement report using one of the following metrics:

- The RSRP (Reference Signal Receiving Power) of the best beam.

- The average RSRP of the N-best beams.

- The average RSRP of the beams whose RSRP is greater than a threshold.

- Other metrics can also be considered.

It is possible that multiple beams of a cell would be used for communication with a UE for diversity gain. Then, RSRP of best beam and average RSRP of certain beams are not sufficient to accurately reflect this situation. And a neighbor cell with multiple qualified beams for the UE may be underestimated.

For example, the UE measures cell A and cell B and the measured result is as follows:

- *Cell A:* 1 beam is qualified
Beam 1: Very good (result = A1)

- *Cell B*: 3 beams are qualified

    Beam 1: Good (result = B1)

    Beam 2: Good (result = B2)

    Beam 3: Good (result = B3)

- It is assumed that A1 > B1 > B2 > B3.

If the RSRP of the best beam is used as the metric, A1 and B1 would be reported. The report shows that Cell A is better than Cell B since A1 > B1.

If the average RSRP of the N-best beams is used as the metric and it is assumed N=2, A1 (since only beam 1 is qualified in Cell A) and the average of B1 and B2 would be reported. The report shows that Cell A is better than Cell B since A1 is better than the average of B1 and B2.

If the average RSRP of the beams whose RSRP is greater than a threshold is used the metric, A1 (since only beam 1 is qualified in Cell A) and the average of B1, B2, and B3 would be reported. The report shows that Cell A is better than Cell B since A1 is better than the average of B1, B2, and B3. However, it may be beneficial in terms of diversity gain to select Cell B.

To fulfill the above concept, one or multiple of following information could be indicated from the UE to network:

- Number of qualified beams of a neighbor cell detected by the UE (optionally plus average of measured results for qualified beams).

- Beam(s) of a neighbor cell which is qualified, e.g. every or a specific number of qualified beams are indicated by the UE.

- Summation of measured results for qualified beams of a neighbor cell.

In the above disclosure, the information indicated from the UE to network may be as follows:

- *Cell A*

   Number of qualified beams (optionally plus average of measured results for qualified beams): 1 (and A1, optionally)

   Qualified beams: beam 1

   Summation of qualified beams: A1

- *Cell B*

   Number of qualified beams (optionally plus average of measured results for qualified beams): 3 (and average of {B1,B2,B3}, optionally)

   Qualified beams: beam 1, beam 2, beam 3

   Summation of qualified beams: B1+B2+B3

When the network receives such information, it may determine that Cell B is better than Cell A due to B1+B2+B3 > A1.

Generally, a neighbor cell may be composed by multiple associated TRPs. If the neighbor cell is going to become a serving cell of the UE, some resources of the neighbor cell may need to be reserved for the UE to perform handover, e.g. dedicated preamble or UL reference signal. It is inefficient if every TRP of the neighbor cell needs to reserve the resources for the UE.

To solve the issue, the UE could indicate qualified TRP(s) or measured result per TRP of a neighbor cell to a network node. Then, the neighbor cell could predict which TRP(s) the UE may connect to and the resources only need to be reserved in some TRP(s). More specifically, one or multiple of following information could be indicated from the UE to the network node:

- Best TRP of a neighbor cell, e.g. TRP with the best beam, the best average measured result, or the best summation measured result.

- Number of qualified TRPs of a neighbor cell detected by the UE.

- TRP(s) of a neighbor cell which is qualified, e.g. every or a specific number of qualified TRPs are indicated by the UE.

- Average of measured results for the N-best beams of one qualified TRP of a neighbor cell.

- Average of measured results for qualified beams of one qualified TRP of a neighbor cell.

- Summation of measured results for qualified beams of one qualified TRP of a neighbor cell.

If UE beamforming is enabled, it is possible that the number of UE beams that a UE can generate concurrently is limited, e.g., some UE may not be able to generate more than one UE beam at a time. In such a case, the network beams that can serve the UE at one time may not be as many as what can be detected by the UE, e.g., using beam sweeping. More specifically, maybe not all the qualified beams detected by the UE can be actually used by the UE altogether. Taking all the qualified beams into account, e.g. calculating measurement result by averaging all the qualified beams, may wrongly reflect the actual radio condition.

To solve the problem, the UE could indicate measurement result, with respect to a UE beam, to a network node. Generally, the information mentioned above could be indicated per UE beam. Specifically, one or multiple of following information could be indicated from the UE to the network node:

- Measurement result of the best beam for a UE beam or for each UE beam.

- Average of measurement results of the N-best beams for a UE beam or for each UE beam.

- Average of measurement results of the beams whose measurement result is greater than a threshold for a UE beam or for each UE beam.

- Number of qualified beams of a neighbor cell for a UE beam or for each UE beam (optionally plus average of measured results for qualified beam for a UE beam or for each UE beam).

- Beam(s) of a neighbor cell which is qualified for a UE beam or for each UE beam, e.g., every or a specific number of qualified beams are indicated by the UE.

- Summation of measured results for qualified beams of a neighbor cell for a UE beam or for each UE beam.

- Best TRP of a neighbor cell for a UE beam or for each UE beam, e.g., TRP with the best beam, the best average measured result, or the best summation measured result.

- Number of qualified TRPs of a neighbor cell for a UE beam or for each UE beam.

- TRP(s) of a neighbor cell which is qualified for a UE beam or for each UE beam, e.g., every or a specific number of qualified TRPs are indicated by the UE.

- Average of measured results for the N-best beams of one qualified TRP of a neighbor cell for a UE beam or for each UE beam.

- Average of measured results for qualified beams of one qualified TRP of a neighbor cell for a UE beam or for each UE beam.

- Summation of measured results for qualified beams of one qualified TRP of a neighbor cell for a UE beam or for each UE beam.

The above information for a UE beam could be the information measured or detected by the UE beam. The measured result or the information could be related to RSRP (Reference Symbol Received Power), RSRQ (Reference Signal Receiving Quality), BER (Block Error Rate), etc.

Whether a beam of the neighbor cell is qualified for the UE could be based on measured result of the beam and an associated threshold. For example, the beam is considered qualified if the measured result of the beam is better than the associated threshold. The associated threshold could be predefined, configured by a network node, and/or provided in system information. A qualified beam could be represented by its beam identity.

Whether a TRP of the neighbor cell is qualified for the UE could be based on calculated measured result of the TRP and an associated threshold. For example, the TRP is considered qualified if the calculated measured result of the TRP is better than the associated threshold. The associated threshold could be predefined, configured by a network node, and/or provided in system information. The calculated measured result could be average of measured results for N-best beams of the TRP, average of measured results for qualified beams of the TRP, or summation of measured results for qualified beams of the TRP. A qualified TRP could be represented by its TRP identity.

The number of beams to derive summation of measured result may be limited by a first threshold. The first threshold could be configured or based on maximum number of beams generated concurrently by a TRP of the neighbor cell.

The above information could be indicated by RRC message, MAC control signaling, or physical layer signaling, e.g., measurement report or CQI (Channel Quality Indicator). Some or all of the above information is not exclusively indicated and could be indicated together. The signal that the UE measures could comprise one or multiple of the following: synchronization signal, reference signal, and/or discovery signal.

Synchronization signals are transmitted in downlink to facilitate cell search. Synchronization signals may comprise primary synchronization signals and secondary synchronization signals. Reference signals are transmitted in downlink to deliver reference point for downlink power. Reference signals may comprise cell-specific reference signals, MBSFN (Multicast-Broadcast Single-Frequency Network) reference signals, UE-specific reference signals, positioning reference signals, CSI reference signals, and/or discovery signals.

A UE may assume presence of the discovery signals consisting of cell-specific reference signals, primary and secondary synchronization signals, and configurable CSI (Channel State Information) reference signals.

**Cell selection / cell reselection** - It is possible that multiple beams of one or multiple TRPs in a cell would be used for communication with a UE for diversity gain when the UE is in connected state. If only the best beam is considered, a cell with multiple qualified beams for the UE may be underestimated.

For example, the UE measures cell A and cell B and the measured result is as follows:

- *Cell A*: 1 beam is qualified
  Beam 1: Very good (result = A1)

- *Cell B*: 3 beams are qualified

  Beam 1: Good (result = B1)

  Beam 2: Good (result = B2)

  Beam 3: Good (result = B3)

If only the best beam is considered, cell A is considered better than cell B since A1 is larger than B1. However, it may be beneficial in terms of diversity gain for the UE to select Cell B.
To solve the issue, one or multiple of following information could be taken into account by the UE to evaluate quality of a cell for cell selection or reselection:

- Number of qualified beams of the cell detected by the UE.

- Number of qualified beams of one qualified (best) TRP of the cell detected by the UE.

- Number of qualified TRPs of the cell detected by the UE.

- Average of measured results for the N-best beams of one qualified (best) TRP of the cell.

- Average of measured results for qualified beams of one qualified (best) TRP of the cell.

- Summation of measured results for qualified beams of the cell.

- Summation of measured results for qualified beams of one qualified (best) TRP of the cell.

In the above disclosure, if the above information is considered, the result may be as follows:

- *Cell A*

  Number of qualified beams: 1

  Qualified beams: beam 1

  Summation of qualified beams: A1

- *Cell B*

  Number of qualified beams: 3

  Qualified beams: beam 1, beam 2, beam 3

  Summation of qualified beams: B1+B2+B3

And the UE may consider that cell B is better than Cell A based on the result, e.g., summation of qualified beams (B1+B2+B3 > A1).
In addition, if UE beamforming is enabled, it is possible that the number of UE beams that a UE can generate concurrently is limited, e.g., some UE may not be able to generate more than one UE beam at one time. In such a case, perhaps not all the qualified beams detected by the UE can be actually used by the UE altogether. Taking all the qualified beams into account, e.g., calculating measurement result by averaging all the qualified beams, may wrongly reflect the actual radio condition.
To solve the problem, the UE could consider the information mentioned above per UE beam to evaluate quality of a cell for cell selection or reselection. Specifically, one or multiple of following information could be taken into account:

- Number of qualified beams of the cell for a UE beam or for each UE beam.

- Number of qualified beams of one qualified (best) TRP of the cell for a UE beam or for each UE beam.

- Number of qualified TRPs of the cell for a UE beam or for each UE beam.

- Average of measured results for the N-best beams of one qualified (best) TRP of the cell for a UE beam or for each UE beam.

- Average of measured results for qualified beams of one qualified (best) TRP of the cell for a UE beam or for each UE beam.

- Summation of measured results for qualified beams of the cell for a UE beam or for each UE beam.

- Summation of measured results for qualified beams of one qualified (best) TRP of the cell for a UE beam or for each UE beam.

The above information for a UE beam could be the information measured or detected by the UE beam. The measured result or the information could be related to RSRP (Reference Symbol Received Power), RSRQ (Reference Signal Receiving Quality), BER (Block Error Rate), etc.

Whether a beam of the cell is qualified for the UE could be based on measured result of the beam and an associated threshold. For example, the beam is considered qualified if the measured result of the beam is better than the associated threshold. The associated threshold could be predefined, configured by a network node, and/or provided in system information. A qualified beam could be represented by its beam identity.

Whether a TRP of the cell is qualified for the UE could be based on calculated measured result of the TRP and an associated threshold. For example, the TRP is considered qualified if the calculated measured result of the TRP is better than the associated threshold. The associated threshold could be predefined, configured by a network node, and/or provided in system information. The calculated measured result could be average of measured results for N-best beams of the TRP, average of measured results for qualified beams of the TRP, or summation of measured results for qualified beams of the TRP. A qualified TRP could be represented by its TRP identity.

The number of beams to derive summation of measured results may be limited by a first threshold. The first threshold could be configured or based on maximum number of beams generated concurrently by a TRP of the neighbor cell.

The signal that the UE measures could comprise one or multiple of the following: synchronization signal, reference signal, and/or discovery signal. Synchronization signals are transmitted in downlink to facilitate cell search. Synchronization signals may comprise primary synchronization signals and secondary synchronization signals. Reference signals are transmitted in downlink to deliver reference point for downlink power. Reference signals may comprise cell-specific reference signals, MBSFN reference signals, UE-specific reference signals, positioning reference signals, CSI reference signals, and/or discovery signals.

A UE may assume presence of the discovery signals consisting of cell-specific reference signals, primary and secondary synchronization signals, and configurable CSI reference signals.

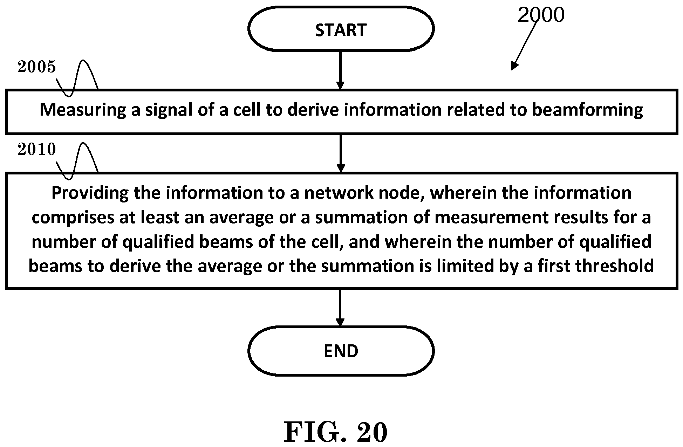

FIG. 20 is a flow chart 2000 according to one exemplary embodiment not covered by the claimed invention from the perspective of a UE. In step 2005, the UE measures a signal of a cell to derive information related to beamforming. In step 2010, the UE provides the information to a network node, wherein the information comprises at least an average or a summation of measurement results for a number of qualified beams of the cell, and wherein the number of qualified beams to derive the average or the summation is limited by a first threshold.

Referring back to FIGS. 3 and 4, in one exemplary embodiment of a UE not covered by the claimed invention, the device 300 includes a program code 312 stored in the memory 310 program code 312. The CPU 308 could execute program code 312 to enable the UE (i) to measure a signal of a cell to derive information related to beamforming, and (ii) to provide the information to a network node, wherein the information comprises at least an average or a summation of measurement results for a number of qualified beams of the cell, and wherein the number of qualified beams to derive the average or the summation is limited by a first threshold. Furthermore, the CPU 308 can execute the program code 312 to perform all of the above-described actions and steps or others described herein.

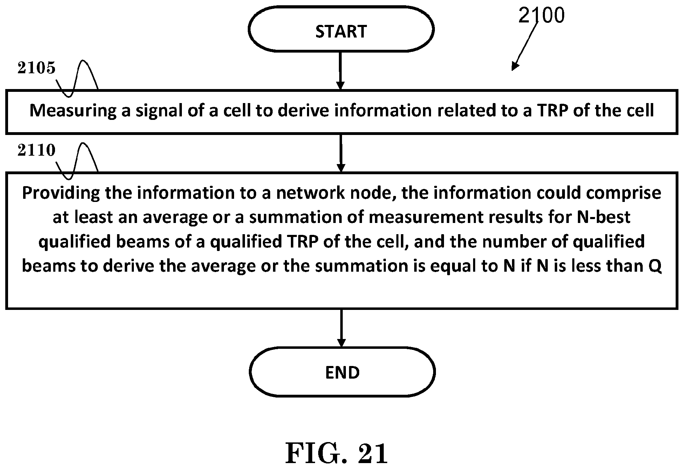

FIG. 21 is a flow chart 2100 according to one exemplary embodiment of the claimed invention from the perspective of a UE. In step 2105, the UE measures a signal of a cell to derive information related to a TRP of the cell. In step 2110, the UE provides the information to a network node. The information comprises at least an average or a summation of measurement results for N-best qualified beams of a qualified TRP of the cell. The number of qualified beams to derive the average or the summation is equal to N if N is less than Q, where Q is the total number of qualified beams of the cell.

Referring back to FIGS. 3 and 4, the device 300 according to the claimed invention includes a program code 312 stored in the memory 310 program code 312. The CPU 308 could execute program code 312 to enable the UE (i) to measure a signal of a cell to derive information related to a TRP of the cell, and (ii) to provide the information to a network node. The information could comprise at least an average or a summation of measurement results for N-best qualified beams of a qualified TRP of the cell. The number of qualified beams to derive the average or the summation is equal to N if N is less than Q, where Q is the total number of qualified beams of the cell. Furthermore, the CPU 308 can execute the program code 312 to perform all of the above-described actions and steps or others described herein.

FIG. 22 is a flow chart 2200 from the perspective of a UE, which is not covered by the claimed invention. In step 2205, the UE measures a signal of a cell to derive information related to beamforming. In step 2210, the UE determines whether to select or reselect the cell to camp on based on at least the information, wherein the information comprises at least an average or a summation of measurement results for a number of qualified beams of the cell, and wherein the number of qualified beams to derive the average or the summation is limited by a first threshold.

Referring back to FIGS. 3 and 4, the device 300 not covered by the claimed invention includes a program code 312 stored in the memory 310 program code 312. The CPU 308 could execute program code 312 to enable the UE (i) to measure a signal of a cell to derive information related to beamforming, and (ii) to determine whether to select or reselect the cell to camp on based on at least the information, wherein the information comprises at least an average or a summation of measurement results for N-best qualified beams of the cell, and wherein the number of qualified beams to derive the average or the summation is equal to N if N is less than Q. Furthermore, the CPU 308 can execute the program code 312 to perform all of the above-described actions and steps or others described herein.

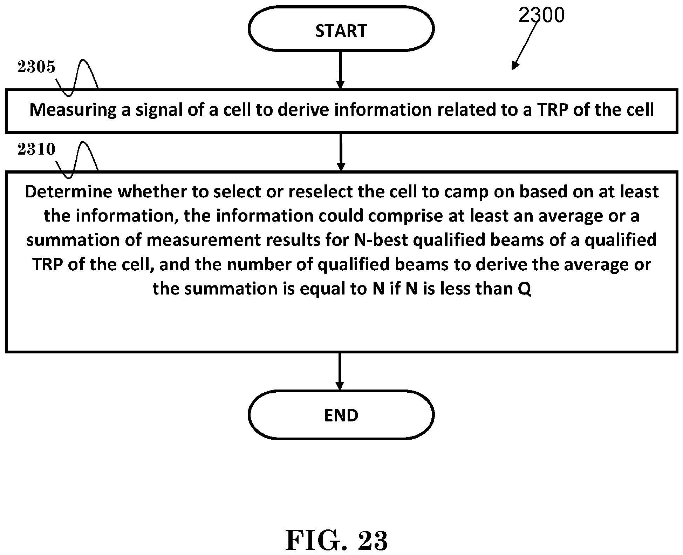

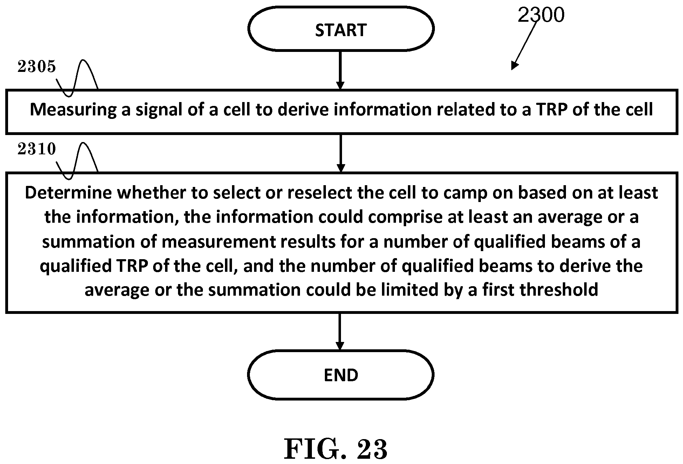

FIG. 23 is a flow chart 2300 from the perspective of a UE according to the claimed invention. In step 2305, the UE measures a signal of a cell to derive information related to a TRP of the cell. In step 2310, the UE determines whether to select or reselect the cell to camp on based on at least the information. The information comprises at least an average or a summation of measurement results for N-best qualified beams of a qualified TRP of the cell. The number of qualified beams to derive the average or the summation is equal to N if N is less than Q, where Q is the total number of qualified beams of the cell.

Referring back to FIGS. 3 and 4, the device 300 according to the claimed invention includes a program code 312 stored in the memory 310 program code 312. The CPU 308 could execute program code 312 to enable the UE (i) to measure a signal of a cell to derive information related to a TRP of the cell, and (ii) to select or reselect the cell to camp on based on at least the information. The information could comprise at least an average or a summation of measurement results for N-best qualified beams of a qualified TRP of the cell. The number of qualified beams to derive the average or the summation is equal to N if N is less than Q. Furthermore, the CPU 308 can execute the program code 312 to perform all of the above-described actions and steps or others described herein.

Preferably, in FIGS. 20, 21, 22, and 23 and discussed above, the signal could be transmitted by the cell or the TRP of the cell using beamforming. The TRP could be a transmission and reception point providing coverage of the cell.

The invention is defined by the independent claims. The dependent claims relate to perferred embodiments of the claimed invention.

According to the invention, the UE provides the following information to the network node: an average of measurement results for best N beams of a qualified TRP of the cell (e.g., if N is less than the number of qualified beams of the qualified TRP), or a summation of measurement results for best N beams of a qualified TRP of the cell (e.g., if N is less than the number of qualified beams of the qualified TRP).

A beam is qualified if the measured result of the beam is better than a second threshold. Whether a beam could be qualified for the UE is based on a measured result of the beam.

Whether a TRP is qualified for the UE is based on a calculated measured result of the TRP. For example, a TRP is qualified if the calculated measured result of the TRP is better than an associated threshold. The calculated measured result could be an average of measured results for the best N beams of the TRP, an average of measured results for qualified beams of the TRP, or a summation of measured results for qualified beams of the TRP.

The associated threshold could be (i) based on a maximum number of beams generated concurrently by a TRP of the cell, (ii) predefined, (iii) configured by a network node, or (iv) provided in system information.

In addition, the information related to beamforming could be provided or considered with respect to a UE beam. The information could be derived based on at least a measured result of the measurement.

Preferably, the information could further include (1) the number of qualified beams of the cell, (2) qualified beam(s) of the cell, (e.g., every qualified beam detected by the UE), and/or (3) qualified beam(s) of the cell up to a specific number (e.g., best N qualified beams).

According to related art not covered by the claimed invention, the information could include:
(1) a best TRP of the cell, (5) a number of qualified TRPs of the cell, (2) qualified TRP(s) of the cell (e.g., every qualified TRP detected by the UE), (3) qualified TRP(s) of the cell up to a specific number (e.g., best N qualified TRPs), and/or (4) a number of qualified beams of a qualified TRP of the cell. Preferably, the best TRP could include a TRP with the best beam, a TRP with the best average measured result, or a TRP with the best summation measured result. The qualified beam could be represented by beam identity. The qualified TRP could also be represented by TRP identity. The cell could be a neighbour cell of the UE.

According to the invention, preferably, the signal comprises at least a synchronization signal and/or a reference signal. According to related art not covered by the claimed invention, the signal comprises a discovery signal. The synchronization signal could be transmitted in downlink to facilitate cell search. The synchronization signal could include a primary synchronization signal and/or a secondary synchronization signal. The reference signal could be transmitted in downlink to deliver reference point for downlink power. The reference signal could include (i) a cell-specific reference signal, (ii) a MBSFN reference signal, (iii) a UE-specific reference signal, (iv) a positioning reference signal, (v) a CSI reference signal, (vi) a discovery signal, and/or (vii) a beam specific reference signal.

According to related art not covered by the claimed invention, preferably, the measured result or the information could be represented by a RSRP, a RSRQ, or a BER. The information could be provided by a RRC message, a MAC control signaling, a physical layer signaling, a measurement report, or a CQI report.

According to related art not covered by the claimed invention, preferably, the information could be UE beam specific. The information could be provided or considered per UE beam specific. The information could be provided or considered with respect to a UE beam.

According to related art not covered by the claimed invention, preferably, the network node could be a central unit (CU), a distributed unit (DU), a transmission/reception point (TRP), a base station (BS), or a 5G node. The UE could be in idle mode or in connected mode. The cell could comprise multiple TRPs.

According to related art not covered by the claimed invention, preferably, the UE could determine whether to select the cell to camp on during cell selection. The UE could determine whether to reselect the cell to camp on during cell reselection. The UE cannot generate more than one UE beam at a time.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

**Claims**

1.  A method of a User Equipment named UE in the following, comprising:

    measuring (2105) a signal of a neighbour cell to derive information related to beamforming, wherein the neighbour cell is not a serving cell of the UE and the neighbour cell comprises multiple Transmission/Reception Points, in the following also referred to as TRPs; and
    providing (2110) the information to a network node for determining, by the network node, whether to select or reselect the neighbour cell as a serving cell for the UE,
    wherein the information comprises at least an average or a summation of measurement results for N-best qualified beams of a qualified TRP of the neighbour cell, and
    the method further comprises receiving a configuration of the N and a configuration of a second threshold from the network node, wherein a beam is qualified if the measurement result of the beam is better than the second threshold and a total number of qualified beams of the neighbour cell is Q, and a TRP is qualified if the measurement result of the TRP is better than an associated threshold,
    **characterized in that**:
    the number of qualified beams to derive the average or the summation is equal to N if N is less than Q.

2.  The method of claim 1, wherein the signal comprises at least a synchronization signal, and/or wherein the signal comprises at least a reference signal.

3.  The method of claim 1 or 2, wherein the information further comprises an amount of qualified beams of the neighbour cell detected by the UE, and/or the information further comprises qualified beam(s) of the neighbour cell up to a specific number.

4.  A method of a User Equipment named UE in the following, comprising:

    measuring (2305) a signal of a neighbour cell to derive information related to beamforming, wherein the neighbour cell is not a serving cell of the UE, the neighbour cell comprises multiple Transmission/Reception Points, in the following also referred to as TRPs, and the information comprises at least an average or a summation of measurement results for N-best qualified beams of a qualified TRP of the neighbour cell; and
    receiving a configuration of N and a configuration of a second threshold from a network node, wherein a beam is qualified if the measurement result of the beam is better than the second threshold and a total number of qualified beams of the neighbour cell is Q and a TRP is qualified if the measurement result of the TRP is better than an associated threshold,
    **characterized in that**
    the method further comprises determining (2310), by the UE, whether to select or reselect the neighbour cell to camp on based on at least the information during a cell selection or reselection, and
the number of qualified beams to derive the average or the summation is equal to N if N is less than Q.

5. The method of claim 4, wherein the UE receives the configuration of N and/or the configuration of the second threshold via system information.

6. The method of claim 4 or 5, wherein the signal comprises at least a synchronization signal and/or wherein the signal comprises at least a reference signal.

7. The method of any one of claims 4 to 6, wherein the information further comprises the number of qualified beams of the neighbour cell.

8. A method of a network node, comprising:

transmitting a signal in a neighbour cell for a UE to measure to derive information related to beamforming wherein the neighbour cell is not a serving cell of the UE and the neighbour cell comprises multiple Transmission/Reception Points, in the following also referred to as TRPs; and
receiving the information, from the UE, and determining, by the network node, whether to select or reselect the neighbor cell as a serving cell for the UE based on the information,
wherein the information comprises at least an average or a summation of measurement results for N-best qualified beams of a qualified TRP of the neighbour cell, and
the method further comprises providing a configuration of N and a configuration of a second threshold to the UE, wherein a beam is qualified if the measurement result of the beam is better than the second threshold and a total number of qualified beams of the neighbour cell is Q and a TRP is qualified if the measurement result of the TRP is better than an associated threshold,
**characterized in that**
the number of qualified beams to derive the average or the summation is equal to N if N is less than Q.

9. The method of claim 8, wherein the signal comprises at least a synchronization signal and/or wherein the signal comprises at least a reference signal.

10. The method of claim 8 or 9, wherein the information further comprises an amount of qualified beams of the neighbour cell detected by the UE, and/or the information further comprises qualified beam(s) of the neighbour cell up to a specific number.

11. A User Equipment named UE in the following, comprising:

a control circuit (306);
a processor (308) installed in the control circuit (306); and
a memory (310) installed in the control circuit (306) and operatively coupled to the processor (308);
**characterized in that** the processor (308) is configured to execute a program code (312) stored in the memory (310) to perform the method steps as defined in any one of claims 1 to 7.

12. A network node, comprising:

a control circuit (306);
a processor (308) installed in the control circuit (306); and
a memory (310) installed in the control circuit (306) and operatively coupled to the processor (308);
**characterized in that** the processor (308) is configured to execute a program code (312) stored in the memory (310) to perform the method steps as defined in any one of claims 8 to 10.

**Patentansprüche**

1. Verfahren einer Teilnehmerausrüstung, im Folgenden UE genannt, umfassend:

Messen (2105) eines Signals einer Nachbarzelle, um Informationen herzuleiten, die sich auf eine Strahlformung beziehen, wobei die Nachbarzelle keine bedienende Zelle der UE ist und die Nachbarzelle mehrere Sende-/Empfangspunkte, im Folgenden auch als TRPs bezeichnet, aufweist; und

Bereitstellen (2110) der Informationen an einen Netzwerkknoten für ein Bestimmen, durch den Netzwerkknoten, ob die Nachbarzelle als eine bedienende Zelle für die UE auszuwählen oder wiederzuwählen ist, wobei die Informationen mindestens einen Mittelwert oder eine Aufsummierung von Messergebnissen für N-best-qualifizierte Strahlen eines qualifizierten TRPs der Nachbarzelle umfassen, und

das Verfahren weiter ein Empfangen einer Konfiguration des N und einer Konfiguration eines zweiten Schwellenwerts von dem Netzwerkknoten umfasst, wobei ein Strahl qualifiziert ist, wenn das Messergebnis des Strahls besser ist als der zweite Schwellenwert, und eine Gesamtanzahl von qualifizierten Strahlen der Nachbarzelle Q ist und ein TRP qualifiziert ist, wenn das Messergebnis des TRPs besser ist als ein zugehöriger Schwellenwert, **dadurch gekennzeichnet, dass**:

die Anzahl von qualifizierten Strahlen, um den Mittelwert oder die Aufsummierung herzuleiten, gleich N ist, wenn N geringer ist als Q.

2. Verfahren gemäß Anspruch 1, wobei das Signal mindestens ein Synchronisationssignal aufweist, und/oder wobei das Signal mindestens ein Referenzsignal aufweist.

3. Verfahren gemäß Anspruch 1 oder 2, wobei die Informationen weiter eine Menge von qualifizierten Strahlen der Nachbarzelle umfassen, die durch die UE erfasst werden, und/oder die Informationen weiter einen qualifizierten Strahl (qualifizierte Strahlen) der Nachbarzelle bis zu einer bestimmten Zahl umfassen.

4. Verfahren einer Teilnehmerausrüstung, im Folgenden UE genannt, umfassend:

Messen (2305) eines Signals einer Nachbarzelle, um Informationen herzuleiten, die sich auf eine Strahlformung beziehen, wobei die Nachbarzelle keine bedienende Zelle der UE ist, die Nachbarzelle mehrere Sende-/Empfangspunkte, im Folgenden auch als TRPs bezeichnet, aufweist und die Informationen mindestens einen Mittelwert oder eine Aufsummierung von Messergebnissen für N-best-qualifizierte Strahlen eines qualifizierten TRPs der Nachbarzelle umfassen; und

Empfangen einer Konfiguration von N und einer Konfiguration eines zweiten Schwellenwerts von einem Netzwerkknoten, wobei ein Strahl qualifiziert ist, wenn das Messergebnis des Strahls besser ist als der zweite Schwellenwert, und eine Gesamtanzahl von qualifizierten Strahlen der Nachbarzelle Q ist und ein TRP qualifiziert ist, wenn das Messergebnis des TRPs besser ist als ein zugehöriger Schwellenwert,

**dadurch gekennzeichnet, dass**

das Verfahren weiter ein Bestimmen (2310), durch die UE, umfasst, ob die Nachbarzelle zur Anforderung auszuwählen oder wiederzuwählen ist, basierend auf mindestens den Informationen während einer Zellauswahl oder einer Zellwiederwahl, und

die Anzahl von qualifizierten Strahlen, um den Mittelwert oder die Aufsummierung herzuleiten, gleich N ist, wenn N geringer ist als Q.

5. Verfahren gemäß Anspruch 4, wobei die UE die Konfiguration von N und/oder die Konfiguration des zweiten Schwellenwerts über Systeminformationen empfängt.

6. Verfahren gemäß Anspruch 4 oder 5, wobei das Signal mindestens ein Synchronisationssignal aufweist, und/oder wobei das Signal mindestens ein Referenzsignal aufweist.

7. Verfahren gemäß einem der Ansprüche 4 bis 6, wobei die Informationen weiter die Anzahl von qualifizierten Strahlen der Nachbarzelle umfassen.

8. Verfahren eines Netzwerkknotens, umfassend:

Senden eines Signals in einer Nachbarzelle für eine UE zum Messen, um Informationen herzuleiten, die sich auf eine Strahlformung beziehen, wobei die Nachbarzelle keine bedienende Zelle der UE ist und die Nachbarzelle mehrere Sende-/Empfangspunkte, im Folgenden auch als TRPs bezeichnet, aufweist; und

Empfangen der Informationen, von der UE, und Bestimmen, durch den Netzwerkknoten, ob die Nachbarzelle als eine bedienende Zelle für die UE auszuwählen oder wiederzuwählen ist, basierend auf den Informationen, wobei die Informationen mindestens einen Mittelwert oder eine Aufsummierung von Messergebnissen für N-best-qualifizierte Strahlen eines qualifizierten TRPs der Nachbarzelle umfassen, und

das Verfahren weiter ein Bereitstellen einer Konfiguration von N und einer Konfiguration eines zweiten Schwellenwerts an die UE umfasst, wobei ein Strahl qualifiziert ist, wenn das Messergebnis des Strahls besser ist als der zweite Schwellenwert, und eine Gesamtanzahl von qualifizierten Strahlen der Nachbarzelle Q ist und ein TRP qualifiziert ist, wenn das Messergebnis des TRPs besser ist als ein zugehöriger Schwellenwert, **dadurch gekennzeichnet, dass** die Anzahl von qualifizierten Strahlen, um den Mittelwert oder die Aufsummierung herzuleiten, gleich N ist, wenn N geringer als Q ist.

9. Verfahren gemäß Anspruch 8, wobei das Signal mindestens ein Synchronisationssignal aufweist, und/oder wobei das Signal mindestens ein Referenzsignal aufweist.

10. Verfahren gemäß Anspruch 8 oder 9, wobei die Informationen weiter eine Anzahl von qualifizierten Strahlen der Nachbarzelle umfassen, die von der UE erfasst werden, und/oder die Informationen weiter einen qualifizierten Strahl (qualifizierte Strahlen) der Nachbarzelle bis zu einer bestimmten Zahl umfassen.

11. Teilnehmerausrüstung, im Folgenden UE genannt, aufweisend:

eine Steuerungsschaltung (306);
einen Prozessor (308), der in der Steuerungsschaltung (306) installiert ist; und
einen Speicher (310), der in der Steuerungsschaltung (306) installiert und betriebsfähig mit dem Prozessor (308) verbunden ist;
**dadurch gekennzeichnet, dass** der Prozessor (308) eingerichtet ist, einen Programm-Code (312), der in dem Speicher (310) gespeichert ist, auszuführen, um die in einem der Ansprüche 1 bis 7 definierten Verfahrensschritte auszuführen.

12. Netzwerkknoten, aufweisend:

eine Steuerungsschaltung (306);
einen Prozessor (308), der in der Steuerungsschaltung (306) installiert ist; und
einen Speicher (310), der in der Steuerungsschaltung (306) installiert und betriebsfähig mit dem Prozessor (308) verbunden ist;
**dadurch gekennzeichnet, dass** der Prozessor (308) eingerichtet ist, einen Programm-Code (312), der in dem Speicher (310) gespeichert ist, auszuführen, um die in einem der Ansprüche 8 bis 10 definierten Verfahrensschritte auszuführen.

**Revendications**

1. Procédé d'un équipement utilisateur dénommé UE ci-après, comprenant :

la mesure (2105) d'un signal d'une cellule voisine pour dériver des informations relatives à la formation de faisceau, dans lequel la cellule voisine n'est pas une cellule de desserte de l'UE et la cellule voisine comprend plusieurs points de transmission/réception, ci-après également appelés TRP ; et
la fourniture (2110) des informations à un nœud de réseau pour déterminer, par le nœud de réseau, s'il faut sélectionner ou resélectionner la cellule voisine en tant que cellule de desserte pour l'UE,
dans lequel les informations comprennent au moins une moyenne ou une somme de résultats de mesure pour N faisceaux les mieux qualifiés d'un TRP qualifié de la cellule voisine, et
le procédé comprend en outre la réception d'une configuration de N et d'une configuration d'un deuxième seuil provenant du nœud de réseau, dans lequel un faisceau est qualifié si le résultat de mesure du faisceau est meilleur que le deuxième seuil et un nombre total de faisceaux qualifiés de la cellule voisine est Q, et un TRP est qualifié si le résultat de mesure du TRP est meilleur qu'un seuil associé,
**caractérisé en ce que** :
le nombre de faisceaux qualifiés pour dériver la moyenne ou la somme est égal à N si N est inférieur à Q.

2. Procédé de la revendication 1, dans lequel le signal comprend au moins un signal de synchronisation, et/ou dans lequel le signal comprend au moins un signal de référence.

3. Procédé de la revendication 1 ou 2, dans lequel les informations comprennent en outre une quantité de faisceaux qualifiés de la cellule voisine détectés par l'UE, et/ou les informations comprennent en outre un/des faisceau(x) qualifié(s) de la cellule voisine jusqu'à un nombre spécifique.

**4.** Procédé d'un équipement utilisateur dénommé UE ci-après, comprenant :

la mesure (2305) d'un signal d'une cellule voisine pour dériver des informations relatives à la formation de faisceau, dans lequel la cellule voisine n'est pas une cellule de desserte de l'UE, la cellule voisine comprend plusieurs points de transmission/réception, ci-après également appelés TRP, et les informations comprennent au moins une moyenne ou une somme de résultats de mesure pour N faisceaux les mieux qualifiés d'un TRP qualifié de la cellule voisine ; et

la réception d'une configuration de N et d'une configuration d'un deuxième seuil provenant d'un nœud de réseau, dans lequel un faisceau est qualifié si le résultat de mesure du faisceau est meilleur que le deuxième seuil et un nombre total de faisceaux qualifiés de la cellule voisine est Q et un TRP est qualifié si le résultat de mesure du TRP est meilleur qu'un seuil associé,

**caractérisé en ce que**

le procédé comprend en outre la détermination (2310), par l'UE, s'il faut sélectionner ou resélectionner la cellule voisine sur laquelle se positionner sur la base d'au moins les informations lors d'une sélection ou resélection de cellule, et

le nombre de faisceaux qualifiés pour dériver la moyenne ou la somme est égal à N si N est inférieur à Q.

**5.** Procédé de la revendication 4, dans lequel l'UE reçoit la configuration de N et/ou la configuration du deuxième seuil via des informations système.

**6.** Procédé de la revendication 4 ou 5, dans lequel le signal comprend au moins un signal de synchronisation et/ou dans lequel le signal comprend au moins un signal de référence.

**7.** Procédé de l'une quelconque des revendications 4 à 6, dans lequel les informations comprennent en outre le nombre de faisceaux qualifiés de la cellule voisine.

**8.** Procédé d'un nœud de réseau, comprenant :

la transmission d'un signal dans une cellule voisine pour qu'un UE puisse mesurer pour dériver des informations relatives à la formation de faisceau, dans lequel la cellule voisine n'est pas une cellule de desserte de l'UE et la cellule voisine comprend plusieurs points de transmission/réception, ci-après également appelés TRP ; et

la réception des informations, de l'UE, et la détermination, par le nœud de réseau, s'il faut sélectionner ou resélectionner la cellule voisine en tant que cellule de desserte pour l'UE sur la base des informations, dans lequel les informations comprennent au moins une moyenne ou une somme de résultats de mesure pour N faisceaux les mieux qualifiés d'un TRP qualifié de la cellule voisine, et

le procédé comprend en outre la fourniture d'une configuration de N et d'une configuration d'un deuxième seuil à l'UE, dans lequel un faisceau est qualifié si le résultat de mesure du faisceau est meilleur que le deuxième seuil et un nombre total de faisceaux qualifiés de la cellule voisine est Q et un TRP est qualifié si le résultat de mesure du TRP est meilleur qu'un seuil associé,

**caractérisé en ce que**

le nombre de faisceaux qualifiés pour dériver la moyenne ou la somme est égal à N si N est inférieur à Q.

**9.** Procédé de la revendication 8, dans lequel le signal comprend au moins un signal de synchronisation et/ou dans lequel le signal comprend au moins un signal de référence.

**10.** Procédé de la revendication 8 ou 9, dans lequel les informations comprennent en outre une quantité de faisceaux qualifiés de la cellule voisine détectés par l'UE, et/ou les informations comprennent en outre un/des faisceau(x) qualifié(s) de la cellule voisine jusqu'à un nombre spécifique.

**11.** Équipement utilisateur dénommé UE ci-après, comprenant :

un circuit de commande (306) ;

un processeur (308) installé dans le circuit de commande (306) ; et

une mémoire (310) installée dans le circuit de commande (306) et couplée de manière fonctionnelle au processeur (308) ;

**caractérisé en ce que** le processeur (308) est configuré pour exécuter un code de programme (312) stocké dans la mémoire (310) pour effectuer les étapes de procédé telles que définies dans l'une quelconque des revendications 1 à 7.

**12.** Noeud de réseau, comprenant :

un circuit de commande (306) ;
un processeur (308) installé dans le circuit de commande (306) ; et
une mémoire (310) installée dans le circuit de commande (306) et couplée de manière fonctionnelle au processeur (308) ;
**caractérisé en ce que** le processeur (308) est configuré pour exécuter un code de programme (312) stocké dans la mémoire (310) pour effectuer les étapes de procédé telles que définies dans l'une quelconque des revendications 8 à 10.

**FIG. 1**

**FIG. 2**

*300*

```
┌─────────────────────────────────────────────────┐
│                                                 │
│  ┌──────────────┐          ┌──────────────┐     │
│  │    INPUT     │          │   OUTPUT     │     │
│  │   DEVICE     │          │   DEVICE     │     │
│  │     302      │          │     304      │     │
│  └──────┬───────┘          └──────┬───────┘     │
│         ↕                         ↕             │
│  ┌──────────────────────────────────────────┐  │
│  │      CONTROL CIRCUIT 306                  │  │
│  │  ┌────────────────────────────────────┐  │  │
│  │  │           CPU 308                  │  │  │
│  │  └────────────────┬───────────────────┘  │  │
│  │                   ↕                       │  │
│  │  ┌────────────────────────────────────┐  │  │
│  │  │         MEMORY 310                 │  │  │
│  │  │  ┌──────────────────────────────┐  │  │  │
│  │  │  │   PROGRAM CODE 312           │  │  │  │
│  │  │  └──────────────────────────────┘  │  │  │
│  │  └────────────────────────────────────┘  │  │
│  └───────────────────┬──────────────────────┘  │
│                      ↕                          │
│  ┌──────────────────────────────────────────┐  │
│  │         TRANSCEIVER 314                   │  │
│  └──────────────────────────────────────────┘  │
│                                                 │
└─────────────────────────────────────────────────┘
```

# FIG. 3

PROGRAM CODE *312*

APPLICATION LAYER *400*

LAYER 3 *402*

LAYER 2 *404*

LAYER 1 *406*

FIG. 4

FIG. 5

**FIG. 6**

FIG. 7

Different deployment scenarios with Single TRP cell

# FIG. 8

Different deployment scenarios with multiple TRPs Cell

**FIG. 9**

FIG. 10

eNB

RRH

Cell1

Cell2

Cell3

Cell4

**4G Cell**

Central
Unit

One cell

DU1

DU2

DU4

DU3

**5G NR Cell**

## FIG. 11

Tx Beamforming Gain

Rx Beamforming Gain

Serving eNB

UE

**FIG. 12**

Tx Beamforming
Weakened Interference  Serving eNB

Neighbor eNB B

Neighbor eNB A

Rx Beamforming
Weakened Interference

UE

**FIG. 13**

EP 3 264 630 B1

FIG. 14

FIG. 15

FIG. 16

FIG. 17

FIG. 18

FIG. 19

2000

START

2005

Measuring a signal of a cell to derive information related to beamforming

2010

Providing the information to a network node, wherein the information comprises at least an average or a summation of measurement results for a number of qualified beams of the cell, and wherein the number of qualified beams to derive the average or the summation is limited by a first threshold

END

FIG. 20

START

2100

2105

Measuring a signal of a cell to derive information related to a TRP of the cell

2110

Providing the information to a network node, the information could comprise at least an average or a summation of measurement results for N-best qualified beams of a qualified TRP of the cell, and the number of qualified beams to derive the average or the summation is equal to N if N is less than Q

END

FIG. 21

2300

```
                        START

2305
Measuring a signal of a cell to derive information related to a TRP of the cell

2310
Determine whether to select or reselect the cell to camp on based on at least
the information, the information could comprise at least an average or a
summation of measurement results for N-best qualified beams of a qualified
TRP of the cell, and the number of qualified beams to derive the average or
the summation is equal to N if N is less than Q

                         END
```

# FIG. 23

START

2300

2305

Measuring a signal of a cell to derive information related to a TRP of the cell

2310

Determine whether to select or reselect the cell to camp on based on at least the information, the information could comprise at least an average or a summation of measurement results for a number of qualified beams of a qualified TRP of the cell, and the number of qualified beams to derive the average or the summation could be limited by a first threshold

END

## FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016018121 A1
- US 20160006122 A1

### Non-patent literature cited in the description

- **NOKIA ; ALCATEL-LUCENT.** Beam Forming Impacts. *R2-162366*
- **SAMSUNG.** Discussion on terminology of beamforming based high frequency NR. *R2-163716*
- **INTEL.** Beam support in NR. *R2-162709*
- **ERICSSON.** Active Mode Mobility in NR: SINR drops in higher frequencies. *R2-162762*
- TR 38.801 V0.1.0, Study on New Radio Access Technology; Radio Access Architecture and Interfaces. *R3-160947*
- Summary of email discussion [93bis#23][NR] Deployment scenarios. *R2-164306*
- RAN2 Impacts in HF-NR. *3GPP RAN2#94 meeting minute; R2-163879*
- Beam level management <-> Cell level mobility. *R2-162210*
- Cell concept in NR. *R2-163471*
- General considerations on LTE-NR tight interworking. *R2-164270*
- RAN2 aspects of high frequency New RAT. *R2-162251*
- Support for Beam Based Common Control Plane. *R1-165364*
- E-UTRA and E-UTRAN; Overall description; Stage 2. *TS 36.300 v13.3.0.*
- E-UTRA; RRC protocol specification (Release 13). *TS 36.331 v13.1.0*
- E-UTRA; UE procedures in idle mode (Release 13). *TS 36.304 v13.1.0*
- Discussion on Beam Measurement and Tracking for 5G New Radio Interface in mmWave Frequency Bands. *R2-162226*